# EUROPEAN PATENT SPECIFICATION

(11) **EP 4 221 119 B1**
(45) Date of publication and mention of the grant of the patent: **26.06.2024**
(21) Application number: 22153863.0
(22) Date of filing: 28.01.2022
(51) Int. Cl.: H04L 12/14, H04L 45/302, H04L 41/08, H04M 15/00, H04W 40/02, H04W 48/18

(54) **METHOD FOR IDENTIFYING AND/OR FOR REFERRING TO A USER EQUIPMENT ROUTE SELECTION POLICY INFORMATION WHEN OPERATING A USER EQUIPMENT CONNECTED TO A TELECOMMUNICATIONS NETWORK, USER EQUIPMENT, SYSTEM OR TELECOMMUNICATIONS NETWORK, PROGRAM AND COMPUTER PROGRAM PRODUCT**
VERFAHREN ZUR IDENTIFIZIERUNG UND/ODER ZUM BEZUG AUF EINE BENUTZERAUSRÜSTUNG VON ROUTENAUSWAHLVERFAHREN BEIM BETRIEB EINER MIT EINEM TELEKOMMUNIKATIONSNETZ VERBUNDENEN BENUTZERAUSRÜSTUNG, BENUTZERGERÄT, SYSTEM ODER TELEKOMMUNIKATIONSNETZ, PROGRAMM UND COMPUTERPROGRAMMPRODUKT
PROCÉDÉ PERMETTANT D'IDENTIFIER ET/OU DE SE RÉFÉRER À DES INFORMATIONS DE POLITIQUE DE SÉLECTION DE ROUTE D'ÉQUIPEMENT UTILISATEUR LORS DU FONCTIONNEMENT D'UN ÉQUIPEMENT UTILISATEUR CONNECTÉ À UN RÉSEAU DE TÉLÉCOMMUNICATIONS, ÉQUIPEMENT UTILISATEUR, SYSTÈME OU RÉSEAU DE TÉLÉCOMMUNICATIONS, PROGRAMME ET PRODUIT PROGRAMME INFORMATIQUE

(43) Date of publication of application: 02.08.2023
(73) Proprietor: Deutsche Telekom AG, 53113 Bonn (DE)
(72) Inventor: COLOM IKUNO, Josep, 2100 Korneuburg (AT); LAUSTER, Reinhard, 3100 St. Pölten (AT)
(74) Representative: Schwöbel, Thilo K.

(56) References cited:
- WO-A1-2019/227313
- ERICSSON ET AL: "UE policies granularity and UE assistance for policy evaluation", 3GPP DRAFT; S2-183005_WAS2605_WAS1612_WAS AGREED S2-181399_UE POLICIES GRANUALITY, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. SA WG2, no. Montreal, Canada; 20180226 - 20180302 5 March 2018 (2018-03-05), XP051408889, Retrieved from the Internet: URL:http://www.3gpp.org/ftp/tsg%5Fsa/WG2%5 FArch/TSGS2%5F126%5FMontreal/Docs/ [retrieved on 2018-03-05]

## Description

### BACKGROUND

The present invention relates a method for identifying and/or for referring to a user equipment route selection policy information when operating a user equipment connected to a telecommunications network, wherein the telecommunications network comprises a core network comprising a policy and charging function, wherein the policy and charging function is configured to transmit user equipment route selection policy information to the user equipment.

Furthermore, the present invention relates to a user equipment for identifying and/or for referring to a user equipment route selection policy information when being operated in connection to a telecommunications network, wherein the user equipment is configured to receive user equipment route selection policy information from a policy and charging function of the telecommunications network.

Additionally, the present invention relates to a system for identifying and/or for referring to a user equipment route selection policy information when operating a user equipment connected to a telecommunications network, wherein the telecommunications network comprises a core network comprising a policy and charging function, wherein the policy and charging function is configured to transmit user equipment route selection policy information to the user equipment.

Furthermore, the present invention relates to a program and to a computer-readable medium for identifying and/or for referring to a user equipment route selection policy information according to the inventive method.

In conventionally known telecommunications networks, in case that uplink traffic needs to be steered, a 5G mobile communication network or 5G system also defines user equipment route selection policies (or UE Routing Policies, URSPs), defined in TS 24.526, that allow the network to mandate the user equipment a set of rules on how to route data packets, i.e., based on a set of rules, such rules indicate or mandate the user equipment to steer specific traffic to a given PDU (protocol data unit) session. In case of a change of the connection conditions and/or of the operation situation of the user equipment, such (especially previously provided) network-mandated rules (on how to route data packets or how to steer specific traffic to a given PDU session) might need to be changed or updated, e.g. due to having become inappropriate, inapplicable and/or at least not adapted to the changed situation of connection conditions and/or of the operation situation of the user equipment.

ERICSSON ET AL: "UE policies granularity and UE assistance for policy evaluation",3GPP DRAFT; S2-183005_WAS2605_WAS1612_WAS AGREED S2-181399_UE POLICIES GRANUALITY, 3RD GENERATION PARTNERSHIP PROJECT (3GPP), MOBILE COMPETENCE CENTRE ; 650, ROUTE DES LUCIOLES ; F-06921 SOPHIA-ANTIPO,vol. SA WG2, no. Montreal, Canada; 20180226 - 20180302 5 March 2018 (2018-03-05), XP051408889,Retrieved from the Internet:URL:http://www.3gpp.org/ftp/tsg%5Fsa/WG2%5FArch/ TSGS2%5F126%5FMontreal/Docs/ [retrieved on 2018-03-05] relates to handling of UE policies in 5g. If

WO 2019/227313 A1 (NOKIA SHANGHAI BELL CO LTD [CN] ET AL.) 5 December 2019 (2019-12-05) relates to policy distribution in a communication system.

However, the repeated transmission of potentially complex user equipment route selection policy rules or user equipment route selection policy information to the user equipment necessarily requires transmission capacity on the air interface between the telecommunications network and the user equipment, and, once transmitted to the user equipment, such user equipment route selection policy information also requires storage space within the user equipment.

### SUMMARY

The invention is defined by the independent claims. Further embodiments of the invention are defined by the dependent claims. Although the invention is only defined by the claims, the below embodiments, examples and aspects are present for aiding in understanding the background and advantages of the invention.

An object of the present invention is to provide a technically simple, effective and cost effective solution for identifying and/or for referring to a user equipment route selection policy information when operating a user equipment connected to a telecommunications network, wherein the telecommunications network comprises a core network comprising a policy and charging function, wherein the policy and charging function is configured to transmit user equipment route selection policy information to the user equipment, wherein a part of a piece of user equipment route selection policy information is able to be identified by means of a user equipment route selection policy identifier. A further object of the present invention is to provide a corresponding user equipment, system or telecommunications network, and a corresponding program and computer-readable medium.

The object of the present invention is achieved by a method according to claim 1.

It is thereby advantageously possible according to the present invention that the repeated transmission of potentially complex user equipment route selection policy rules or user equipment route selection policy information towards the user equipment is able to be avoided, or at least reduced. Thus, transmission capacity on the air interface between the telecommunications network, required for the transmission of potentially complex user equipment route selection policy rules or user equipment route selection policy information towards the user equipment, is able to be reduced. Furthermore, storage space within the user equipment is also able to be potentially reduced. Such advantages according to the present invention are especially beneficial in case that the user equipment is able to trigger to notify towards the telecommunications network, especially a corresponding core network (especially the core network of the home public land mobile network), that, e.g., a network change happened so that the corresponding telecommunications network or core network (especially of the home network or the home public land mobile network) triggers the setting of corresponding user equipment route selection policy information or rules thereof that correspond to or are appropriate or adapted to the current situation of the user equipment.

Hence, it is especially advantageously possible, according to the present invention, that - especially in case of a change of the connection conditions and/or of the operation situation of the user equipment (which might especially be detected or determined by the user equipment itself) that triggers an update of the user equipment route selection policy rules to be applies by the user equipment - a transmission, to the user equipment, of user equipment route selection policy information or user equipment route selection policy rules (especially with all its or their components), or at least of parts thereof, might either not need to happen or might, if applicable, at least not need to happen repeatedly with or regarding (at least partly) one and the same information content of such rules or pieces of information.
Hence according to the present invention, it is advantageously possible to either avoid or at least reduce the transmission of user equipment route selection policy information and/or user equipment route selection policy rules, or, at least, of parts or components thereof.
Hence, it might advantageously be possible, according to the present invention, to be able to more quickly and more efficiently update and/or adapt the user equipment route selection policy ruleset (previously received and to be applied by the user equipment) to currently changed connection conditions and/or the current operation situation of the user equipment.

According to the present invention, by means of being able to identify - using a user equipment route selection policy identifier - a part of a piece of user equipment route selection policy information (especially a component of a user equipment route selection policy rule, by means of, in a first step, assign the user equipment route selection policy identifier to a part of the considered piece of user equipment route selection policy information (or, vice versa, by means of assigning the part of the considered piece of user equipment route selection policy information to the user equipment route selection policy identifier)), it is - in a second step - advantageously possible that a further piece of user equipment route selection policy information (such as a user equipment route selection policy rule or a component thereof) refers to the considered user equipment route selection policy identifier, and thereby referring to the part of the considered piece of user equipment route selection policy information - or thereby integrating the part of the considered piece of user equipment route selection policy information by reference.

Furthermore according to the present invention, the telecommunications network typically comprises an access network and a core network; however, the present invention is also related to situations where the telecommunications network does not comprise, strictly speaking, both an access network and a core network, but where the telecommunications network is only associated or assigned to an access network (and especially comprises the core network), or where the telecommunications network is only associated or assigned to a core network (and especially comprise the access network), or where the telecommunications network is only associated or assigned to both an access network and a core network. According to the present invention, the core network especially provides the user equipment with data connectivity towards a data network.

In conventionally known telecommunications networks, a user equipment is typically able to be connected, via the core network, to a data network. The user equipment typically communicates with the access network (or radio access network) via an interface, typically a radio interface or air interface. This is used for conveying both signaling information and data traffic, but there is typically a logical separation (logical channels) for the transport of both types of traffic. Likewise, between the access network (especially the radio access network, and especially a gNB base station entity) and the core network, signaling information and user data are typically separated.
In order to establish a data connection enabling a user equipment to communicate with a data network, a protocol data unit (PDU) session is required. A PDU session is a logical data transport channel terminated at the core network that provides connectivity to a data network. The termination point of a given PDU session (user plane function according to, e.g., the 5G standard) is termed PDU session anchor (PSA). While a user equipment moves (handover procedures occur between the user equipment and different gNBs or base station entities), the PDU session anchor is, normally and typically, expected to remain constant. A PDU session can have one or more an associated quality-of-service for the underlying transported data (e.g. one or more QoS flows within the PDU session).

In currently known telecommunications networks as well as according to the present invention, user equipment route selection policy information or user equipment route selection policy rules is/are used by the telecommunications network to oblige user equipments to use a set of rules to apply to, or steer, uplink traffic, i.e. how to route data packets. Especially such user equipment route selection policy rules indicate or mandate the user equipment to steer specific traffic to a given, or predetermined, PDU (protocol data unit) session. Especially such user equipment route selection policy rules or such user equipment route selection policy information is set or defined by the core network of the telecommunications network, i.e. the telecommunications network (core network thereof) sets a user equipment route selection policy rule or user equipment route selection policy information by means of transmitting a corresponding message to the user equipment as part of the control data flow exchange between the telecommunications network and the user equipment over the air interface between the user equipment and the corresponding access network element, typically a base station entity such as, e.g., a gNodeB entity. As a consequence of the user equipment receiving such a user equipment route selection policy rule (or plurality thereof) or user equipment route selection policy information, the user equipment is able to apply or will apply such rule information, i.e. traffic, especially application traffic (in uplink direction, towards the telecommunications network) that matches the corresponding user equipment route selection policy rule or user equipment route selection policy information is routed, by the user equipment, as mandated or prescribed by the user equipment route selection policy rule / information.
In currently known telecommunications networks, the user equipment route selection policy rules or user equipment route selection policy information itself, i.e. especially its structure, is defined in 3GPP TS 23.503 and is a set of one or more URSP rules, where a URSP rule is generally composed of three parts, namely a precedence value as the first part, a traffic descriptor as the second part, and one or more route selection descriptors as the third part.
The precedence value (as the first part of a user equipment route selection policy rule) of the URSP rule identifies the precedence of the considered URSP rule among all the existing URSP rules (either already present at the user equipment or transmitted as part of the user equipment route selection policy information). The traffic descriptor (as the second part of a user equipment route selection policy rule) includes either a match-all traffic descriptor, or at least one of the following components: one or more application identifiers, one or more IP 3 tuples as defined in 3GPP TS 23.503, i.e. the destination IP address, the destination port number, and the protocol in use above the IP, one or more non-IP descriptors, i.e. destination information of non-IP traffic, one or more DNNs (data network name), one or more connection capabilities, one or more domain descriptors, i.e. destination FQDN(s) (fully qualified domain name(s)). Each route selection descriptor (as the third part of a user equipment route selection policy rule) consists of a precedence value of the route selection descriptor and either a non-seamless non-3GPP offload indication, or one PDU session type and, optionally, one or more of the following: SSC mode (session and service continuity mode), one or more S-NSSAIs (Single Network Slice Selection Assistance Information), one or more DNNs, a preferred access type, a multi-access preference, a time window, and location criteria.
In this context, the time window indication and the location criteria are part of the route selection descriptor (or third part of a user equipment route selection policy rule) even though they do not actually describe the traffic routing but, rather, correspond to route selection validation criteria: a given or considered route selection descriptor is not considered valid unless all the provided validation criteria are met and controls the validity of said element. The components describing the actual routing correspond to route selection components.
Regarding the application of user equipment route selection policy rules or user equipment route selection policy information, (specified in TS 23.503, 6.6.2.3), for every newly detected application (i.e. requiring an uplink data stream to be transmitted by the user equipment), the user equipment evaluates the available (i.e. stored or received) URSP rules in the order of rule precedence and determines if the application is matching the traffic descriptor of any URSP rule; when a URSP rule is determined to be applicable for a given application (clause 6.6.2.1), the user equipment shall select a route selection descriptor within this URSP rule in the order of the route selection descriptor precedence; if the user equipment determines that there is more than one matching and existing PDU Session (e.g. the selected route selection descriptor only specifies the network slice selection, while there are multiple existing PDU Sessions matching the network slice selection with different DNNs), it is up to user equipment implementation to select one of them to use.

According to the present invention, a user equipment is considered that is connected to a telecommunications network, and the telecommunications network comprises a core network that comprises a policy and charging function. The policy and charging function is configured to transmit user equipment route selection policy information to the user equipment.
Specifically according to the present invention, a part of a piece of user equipment route selection policy information is able to be identified by means of a user equipment route selection policy identifier, i.e. a piece of identifier information, e.g. a number, an alphanumeric identifier or a string identifier, especially having a specific structure, or different information fields such as:
-- Network identifier of the network that generated the user equipment route selection policy information, e.g. public land mobile network identifier, network identifier
-- Origin of the user equipment route selection policy information, e.g. whether set by the network, pre-configured within the user equipment, configured by an application
-- Identifier of the application that generated the user equipment route selection policy information
-- Group identifier, which may be shared with one or more other user equipment route selection policy informations
-- Integrity information related to the network and/or network element that generated the user equipment route selection policy information
-- Address, e.g. uniform resource locator, of the location of the user equipment route selection policy information
-- Universally unique identifier univocally identifying the user equipment route selection policy information within a network and/or among several networks
-- Type of user equipment route selection policy information, e.g. user equipment route selection policy, traffic descriptor, route selection descriptor list, route selection component, route selection validation criteria.
Hence, it is possible to assign a part of a piece of user equipment route selection policy information (i.e. the content of a part of such a user equipment route selection policy information) to a user equipment route selection policy identifier (or user equipment route selection policy identifier information). According to the present invention, this possibility to identify or to assign is operatively used, i.e. in a first step, a part of a considered piece of user equipment route selection policy information (i.e. especially the content thereof) is assigned to a considered (or specific) user equipment route selection policy identifier (information), and, in a second step, a further piece of user equipment route selection policy information refers to the (considered or specific) user equipment route selection policy identifier (information), i.e. regarding the further (operatively used) piece of user equipment route selection policy information, the definition of its content is based, at least partly, not by explicitly providing its content (e.g. by means of enumerating different conditions or allowed or disallowed parameters) but by referring to the user equipment route selection policy identifier (information).

According to the present invention, it is preferred that the user equipment comprises, for a given access technology (i.e. especially regarding each access technology for which standalone non-public networks might be accessible), an access mode configuration information. The access mode configuration information relates to or indicates a first network selection mode and at least a second network selection mode that the user equipment is alternatively able to use.
In this respect, especially the concept of user equipments being allowed to also access standalone non-public networks is relevant: These standalone non-public networks have the particularity that additional network identifiers are used; while for public land mobile networks, the PLMN ID (public land mobile network identifier, i.e. a combination of mobile country code (MCC) and the mobile network code (MNC)), is assumed to be unique, standalone non-public networks are designed with the assumption that the PLMN ID they use is not (necessarily) unique (e.g. a PLMN ID of "99999" is or might be operatively used), and introduce an additional identifier, the network identifier (NID). As defined in 3GPP TS 23.501, the combination of a PLMN ID and a network identifier (NID) identifies a standalone non-public network, and the PLMN IDs reserved for use by private networks can be used for non-public networks (e.g. based on mobile country code (MCC) "999" as assigned by ITU). Alternatively however, a PLMN operator might use its PLMN IDs for SNPN(s) along with NID(s), but registration in a PLMN and mobility between a PLMN and an SNPN are not supported using an SNPN subscription, especially due to the SNPNs typically not relying on network functions provided by the PLMN.
Hence, in case a SNPN-enabled user equipment supports the SNPN access mode, when such a user equipment is set to operate in SNPN access mode, the user equipment only selects and registers with SNPNs (over Uu as described in clause 5.30.2.4). This results in such user equipments (i.e. supporting SNPNs) being able to switch between two operating modes, i.e. the first network selection mode and at least a second network selection mode, that the user equipment is alternatively able to use, e.g. SNPN access mode and the normal (or PLMN) access mode (more than two of such different access modes are possible according to the present invention and are not excluded). Hence, in such a scenario, depending on the type of network the user equipment wishes to access, this network selection mode (i.e. the access mode configuration information, or, rather, its content) can be switched.
It is preferred according to the present invention, that the user equipment route selection policy information comprises an access mode-related validity element that is related to the content of the access mode configuration information. Hence, in case of a user equipment route selection policy information being present (i.e. stored) at the user equipment (i.e. the user equipment comprises such a user equipment route selection policy information) or received by the considered user equipment, the user equipment route selection policy information is potentially applied, or not applied, by the user equipment, depending on whether the access mode-related validity element (of the user equipment route selection policy information) corresponds to the access mode configuration information or not, i.e. if it matches the content of the access mode configuration information.
Hence by means of the user equipment route selection policy information comprising the access mode-related validity element (that is related to the content of the access mode configuration information), and by means of the user equipment applying the user equipment route selection policy information, depending on the access mode-related validity element, it is advantageously possible to avoid potential conflict situations between, on the one hand, user equipment route selection policy information (without such access mode-related validity element), and, on the other hand, a current situation or context of the user equipment.
However, the user equipment first needs to receive such an appropriate user equipment route selection policy information (e.g. comprising the access mode-related validity element) before being able to appropriately implement or comply therewith. According to the present invention, it is advantageously possible for the user equipment to actively request to be provided with a new or an updated user equipment route selection policy rule or a plurality thereof, e.g. a user equipment route selection policy information.

According to the present invention, it is advantageously possible and preferred that the reference, by the further piece of user equipment route selection policy information, to the part of the piece of user equipment route selection policy information results in the further user equipment route selection policy information comprising the user equipment route selection policy content of the part of the piece of user equipment route selection policy information.

Hence, by means of the reference to the part of the piece of user equipment route selection policy information - by the further piece of user equipment route selection policy information - resulting in the further user equipment route selection policy information comprising the (user equipment route selection policy) content of the referred part of the piece of user equipment route selection policy information, it is advantageously possible according to the present invention, to address this content without the necessity to (explicitly) repeat it - the only requirement being to refer to (instead of copying (all) this content of the referred part of the piece of user equipment route selection policy information) the corresponding user equipment route selection policy identifier (information), being representative of the respective content or representing this content.

According to the present invention, it is furthermore advantageously possible and preferred that the user equipment comprises a user equipment route selection policy component repository, wherein the user equipment route selection policy component repository comprises one or a plurality of pieces of referable user equipment route selection policy information or part thereof, each of these pieces of referable user equipment route selection policy information or part thereof comprising or being assigned or associated to a respective user equipment route selection policy identifier (information), wherein the further piece of user equipment route selection policy information that is operatively used by the user equipment uses at least part of the pieces of referable user equipment route selection policy information or part thereof. Furthermore, according to the present invention, it is advantageously possible and preferred that the one or a plurality of pieces of referable user equipment route selection policy information comprises a validity indication, wherein the user equipment evaluates a piece of referable user equipment route selection policy information if (and especially also only if) the validity indication indicates that the pieces of referable user equipment route selection policy information is valid.

It is thereby advantageously possible to realize and implement the inventive method in a comparatively simple and efficient manner: By means of the user equipment route selection policy component repository present at or as part of or within the user equipment, it is advantageously possible to store and to organize the pieces of referable user equipment route selection policy information (or part thereof) and the corresponding user equipment route selection policy identifiers (or the corresponding pieces user equipment route selection policy identifier information).
By means of the one or a plurality of pieces of referable user equipment route selection policy information comprising a validity indication, and a piece of referable user equipment route selection policy information being evaluated if (and especially also only if) the validity indication indicates that the pieces of referable user equipment route selection policy information is valid, it is advantageously possible to selectively activate and/or deactivate the use of such pieces of referable user equipment route selection policy information.

According to the present invention, it is furthermore advantageously possible and preferred that the telecommunications network or a part thereof, especially the policy and charging function, comprises or is able to access a user equipment route selection policy repository, wherein the user equipment route selection policy repository comprises one or a plurality of pieces of referable user equipment route selection policy information or part thereof, wherein each of these pieces of referable user equipment route selection policy information or part thereof comprises or is assigned or associated to a respective user equipment route selection policy identifier (information), wherein in order for the user equipment to operatively use the further piece of user equipment route selection policy information or part thereof referring to or comprising the user equipment route selection policy identifier (information), the method furthermore comprises the steps of:
-- in a third step, subsequent to the first step, the user equipment receives the further piece of user equipment route selection policy information or part thereof, especially from the telecommunications network or a part thereof, especially from the policy and charging function, (and especially comprising at least one user equipment route selection policy identifier or at least one piece of user equipment route selection policy identifier information)
-- in a fourth step, subsequent to the third step, the user equipment retrieves, from the user equipment route selection policy repository, a piece of referable user equipment route selection policy information or part thereof by means of using the respective user equipment route selection policy identifier,
wherein especially the user equipment stores or caches the piece of referable user equipment route selection policy information or part thereof.

By means of the telecommunications network, especially the policy and charging function thereof, only being required to transmit the user equipment route selection policy identifier (information) (being part of the further piece of user equipment route selection policy information), the telecommunications network (especially the policy and charging function thereof) is not required to transmit the explicit content that this user equipment route selection policy identifier (information) is representative of, this content (i.e. the part of the piece of referable user equipment route selection policy information) being accessible (to the user equipment) using the user equipment route selection policy repository.

Furthermore, it is advantageously possible and preferred according to the present invention that, in a fifth step, subsequent to the fourth step, the user equipment subscribes to changes with respect to the piece of referable user equipment route selection policy information or part thereof, and, in case of such changes, the user equipment receives a notification of modification or a notification of deletion regarding the piece of referable user equipment route selection policy information from the user equipment route selection policy repository.

It is thereby advantageously possible to efficiently realize and implement the inventive method in a comparatively simple and efficient manner; especially, it is thereby advantageously possible to as much as possible avoid to repeatedly transmit one and the same information content from the telecommunications network to the user equipment regarding user equipment route selection policy information or rules thereof; instead, such user equipment route selection policy information or user equipment route selection policy rules (or parts thereof) are able to referred (or addressed) by means of only transmitting the respective (pieces of) user equipment route selection policy identifier(s) (information) representative thereof, and otherwise relying on the contents of the user equipment route selection policy repository, comprising the explicit content of the plurality of pieces of referable user equipment route selection policy information (or part thereof).

Furthermore, it is advantageously possible and preferred according to the present invention that, in a sixth step, subsequent to the fifth step, the user equipment transmits to the user equipment route selection policy repository a corresponding information in case that the notification of modification or the notification of deletion regarding the piece of referable user equipment route selection policy information resulted in
-- a modification of the corresponding further piece of user equipment route selection policy information, or
-- a removal of the corresponding further piece of user equipment route selection policy information, or
-- an error regarding the corresponding further piece of user equipment route selection policy information.

It is thereby advantageously possible to realize and implement the inventive method in a comparatively simple and efficient manner.

According to a further preferred embodiment of the present invention, in a seventh step, subsequent to the first step, the user equipment queries the user equipment route selection policy repository for at least one further piece of user equipment route selection policy information relating to a query information, and the user equipment receives at least one matching further piece of user equipment route selection policy information.

It is thereby advantageously possible to realize and implement the inventive method in a comparatively simple and efficient manner.

According to a further preferred embodiment of the present invention, the policy and charging function and/or the user equipment route selection policy repository is able to be requested, by the user equipment or another entity (e.g. a network slice owner and/or application owner), to modify more than one route selection policy rules or user equipment route selection policy information based on
-- a provided partial piece of user equipment route selection policy identifier, thereby applying such modifications to all concerned pieces of user equipment route selection policy information having or corresponding to user equipment route selection policy identifiers that are sharing the parts or a certain structure or different information fields of the partial piece of user equipment route selection policy identifier and/or
-- matching parameters within the user equipment route selection policy rule or user equipment route selection policy information.

It is thereby advantageously possible to realize and implement the inventive method in a comparatively simple and efficient manner.

Furthermore, the present invention relates to a user equipment according to claim 10.

Furthermore, the present invention relates to a system according to claim 11.

Additionally, the present invention relates to a program comprising a computer readable program code and/or a computer-readable medium comprising instructions, which, when executed on a computer and/or on a user equipment and/or on a network node of a telecommunications network, especially a policy and charging function, or in part on the user equipment and/or in part on the network node of a telecommunications network, especially the policy and charging function, causes the computer and/or the user equipment and/or the network node of a telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the telecommunications network comprises a core network comprising a policy and charging function, wherein the policy and charging function is configured to transmit user equipment route selection policy information to the user equipment.
Figure 2 schematically illustrates the transmission of user equipment route selection policy information towards the user equipment.
Figure 3 schematically illustrates an embodiment of the use of user equipment route selection policy identifiers in order to more efficiently define user equipment route selection policy information or user equipment route selection policy rules.
Figure 4 schematically illustrates an embodiment how a separate user equipment route selection policy component repository is able to be used to build user equipment route selection policy information (or user equipment route selection policy rules) efficiently by reusing user equipment route selection policy components.
Figure 5 schematically illustrates the user equipment route selection policy information being stored in the user equipment, wherein the user equipment route selection policy information or user equipment route selection policy rules comprise(s) a validity indication, or a validity flag information.
Figure 6 schematically illustrates an embodiment of the transmission of user equipment route selection policy information towards the user equipment according to the present invention.
Figure 7 schematically illustrates a further embodiment of the transmission of user equipment route selection policy information towards the user equipment according to the present invention.
Figure 8 schematically illustrates an embodiment of a modification and/or deletion of user equipment route selection policy information according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

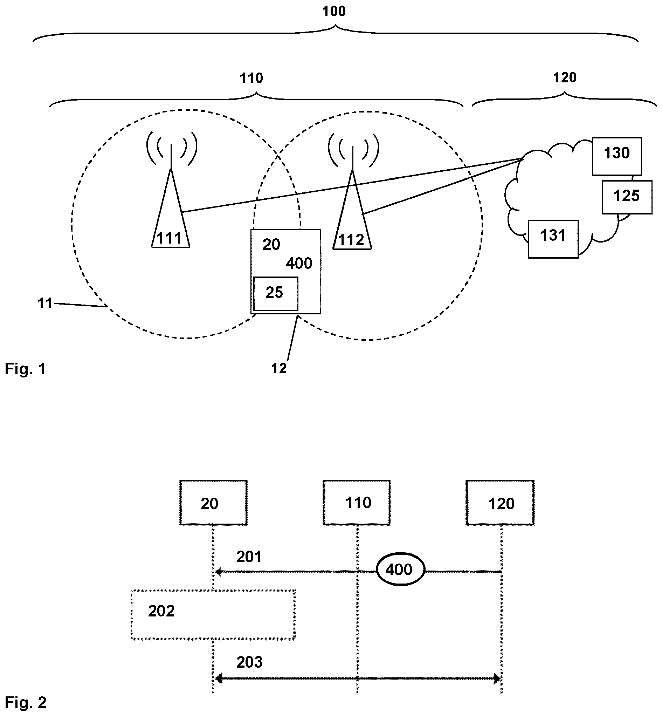

In Figure 1, a telecommunications network 100 comprising an access network 110, and a core network 120 is schematically shown. The telecommunications network 100, especially the core network 120, comprises a policy and charging function 130, wherein the policy and charging function 130 is configured to transmit user equipment route selection policy information to the user equipment 20. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 comprises user equipment route selection policy information 400.
The user equipment 20 is typically, but not necessarily, mobile i.e. able to move with respect to the (typically, but not necessarily static) radio cells 11, 12 or corresponding base station entities 111, 112 of the access network 110. In the exemplarily represented illustration of Figure 1, the core network 120 comprises or is connected to a data network 131. The core network 120 provides the user equipment 20 with data connectivity towards the data network 131.
Furthermore, a user equipment route selection policy repository 125 is at least accessible via the telecommunications network 100, and it is especially part of the telecommunications network 100 or of the core network 120 thereof.

According to the present invention, it is preferred that the user equipment 20 comprises, for a given access technology, an access mode configuration information relating to or indicating a first network selection mode and at least a second network selection mode that the user equipment is alternatively able to use; however, such an access mode configuration information is not mandatorily present or existent at the user equipment 20, and, hence, is not shown in Figure 1. Furthermore, it is preferred according to the present invention that the user equipment route selection policy information 400 comprises an access mode-related validity element (which is neither shown in Figure 1), which indicates the user equipment whether the user equipment route selection policy information 400 should be evaluated.

In Figure 2, the transmission of user equipment route selection policy information 400 towards the user equipment 20 is schematically shown by means of a communication diagram between the user equipment 20, the access network 110, and the core network 120. According to the present invention, user equipment route selection policy information 400 is (or user equipment route selection policy rules 400 are) used by the telecommunications network 100 to oblige the user equipment 20 to use a set of rules to apply to, or steer, uplink traffic, i.e. how to route data packets are routed towards the core network 120 and/or towards a data network 131. Especially, such user equipment route selection policy information or rules 400 indicate or mandate the user equipment 20 to steer specific traffic to a given, or predetermined, PDU (protocol data unit) session. Especially such user equipment route selection policy rules or information 400 is set or defined by the core network 120 of the telecommunications network 100, i.e. the telecommunications network 100 (or the core network 120 thereof) sets the user equipment route selection policy rule or information 400 by means of transmitting (during or using a first processing step 201) a corresponding message to the user equipment 20, especially as part of the control data flow exchange between the telecommunications network 100 and the user equipment 20 over the air interface between the user equipment 20 and the corresponding access network element, typically a base station entity 111, 112 such as, e.g., a gNodeB entity. As a consequence of the user equipment 20 receiving the user equipment route selection policy rule (or plurality thereof) 400 or user equipment route selection policy information 400, the user equipment 20 applies such rule information (during a second processing step 202), i.e. traffic, especially application traffic (in uplink direction, towards the telecommunications network 100) that matches the corresponding user equipment route selection policy rule or information 400 is routed (in or during a third processing step 203), by the user equipment 20, as mandated or prescribed by this user equipment route selection policy rule / information 400.
However, as already said, in case of a change of the connection conditions and/or of the operation situation of the user equipment 20, the previously provided network-mandated rules on how to route data packets or how to steer specific traffic to a given PDU (protocol data unit) session might become inappropriate, inapplicable and/or at least not adapted to the respective situation of the user equipment 20.

Hence, according to the present invention, it is proposed to provide a method, user equipment, system and/or telecommunications network such that a part of a piece of user equipment route selection policy information 400 is able to be identified by means of a user equipment route selection policy identifier 455 (or user equipment route selection policy identifier information 455). In order to identify and/or to refer to such a part of a piece of user equipment route selection policy information 400, it is proposed, according to the present invention, that, in a first step, the part of the piece of user equipment route selection policy information 400 is assigned to the user equipment route selection policy identifier (information) 455, and, in a second step, a further piece of user equipment route selection policy information 401 refers to this user equipment route selection policy identifier (information) 455.
Hence, the present invention is related to identifying and/or referring to user equipment route selection policy information 400 when operating the user equipment 20 connected to the telecommunications network 100. Typically, the telecommunications network 100 comprises the core network 120, and the core network 120 the policy and charging function 130, wherein the policy and charging function 130 is configured to transmit user equipment route selection policy information 400 to the user equipment 20 as this is shown in Figure 2.

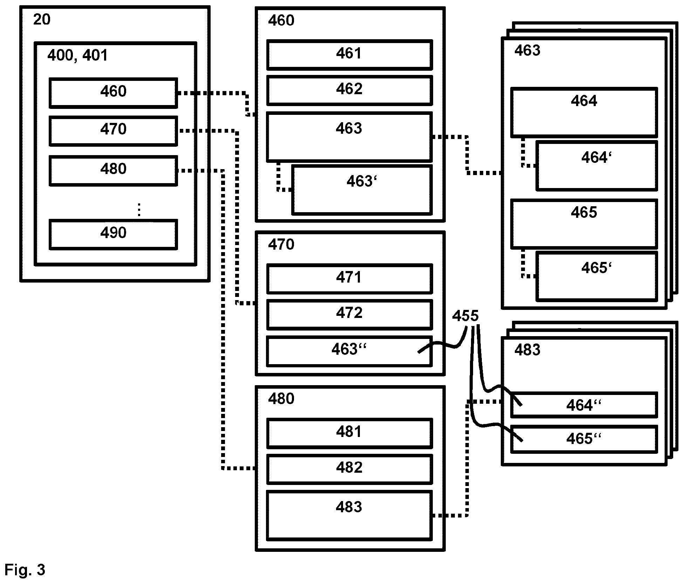

According to the present invention, by means of, in the first step, assigning the user equipment route selection policy identifier 455 to a considered part of a piece of user equipment route selection policy information 400 (or, vice versa, by means of assigning the considered part of the piece of user equipment route selection policy information 400 to the user equipment route selection policy identifier 455), it is advantageously possible to identify or to refer to such parts of user equipment route selection policy information 400 using the user equipment route selection policy identifier 455. Hence, it is advantageously possible - in the second step - that a further piece of user equipment route selection policy information 401 (such as a user equipment route selection policy rule or a component thereof) refers to the considered user equipment route selection policy identifier 455, and thereby refers to the considered part of the piece of user equipment route selection policy information 400, thereby integrating the referred part of the user equipment route selection policy information 400 by reference. This is schematically shown in Figure 3, which schematically illustrates an embodiment of the use of user equipment route selection policy identifiers 455 (or pieces of user equipment route selection policy identifier information 455) in order to more efficiently define user equipment route selection policy information 400 or user equipment route selection policy rules.
Figure 3 schematically shows the structure of a user equipment route selection policy information 400 (or of a further piece of user equipment route selection policy information 401) according to the present invention: The (further) user equipment route selection policy information 400, 401 comprises a plurality of user equipment route selection policy rules 460, 470, 480, 490 (a first user equipment route selection policy rule 460, a second user equipment route selection policy rule 470, a third user equipment route selection policy rule 480, and a fourth user equipment route selection policy rule 490), and the structures of the first, second and third user equipment route selection policy rule 460, 470, 480 are schematically shown; however, it is understood that such structure or structures is only provided exemplarily.
According to the exemplary embodiment shown in Figure 3, the first user equipment route selection policy rule 460 comprises a precedence value 461, a traffic descriptor 462 and at least one route selection descriptor (list) 463. The route selection descriptor (list) 463 comprises a list identifier A (designated, in Figure 3, by reference sign 463'), and, furthermore, the route selection descriptor (list) 463 comprises route selection components 464, and route selection validation criteria 465. According to the exemplary embodiment shown in Figure 3, the route selection components 464 comprises a component identifier B (designated, in Figure 3, by reference sign 464'), and the route selection validation criteria 465 comprises a criteria identifier C (designated, in Figure 3, by reference sign 465'). The list identifier A 463' (of the route selection descriptor (list) 463), the component identifier B 464' (of the route selection components 464), and the criteria identifier C 465' (of the route selection validation criteria 465) are examples of parts of pieces of user equipment route selection policy information 400 that are able to be identified by means of the user equipment route selection policy identifier 455; of course a different (piece of) identifier (information) 455 is needed, respectively, to (univocally) identify these parts 463', 464', 465' of the user equipment route selection policy information 400. Such different identifiers 455 or pieces of identifier information 455 are shown, in Figure 3, as parts of the second and third user equipment route selection policy rules 470, 480: The second user equipment route selection policy rule 470 likewise comprises a corresponding precedence value 471, and a corresponding traffic descriptor 472; however, the associated route selection descriptor (list) (of the second user equipment route selection policy rule 470) is provided in the form of an identifier 455 (or a piece of identifier information 455), namely a first identifier information 463", referring to the list identifier A 463' (of the route selection descriptor (list) 463 of the first user equipment route selection policy rule 460). Likewise, the third user equipment route selection policy rule 480 comprises a corresponding precedence value 481, a corresponding traffic descriptor 482, and a corresponding route selection descriptor (list) 483; however, the associated route selection descriptor (list) 483 (of the third user equipment route selection policy rule 480) is likewise provided in the form of two identifiers 455 (or pieces of identifier information 455), namely a second identifier information 464", referring to the component identifier B 464' (of the route selection descriptor (list) 463 of the first user equipment route selection policy rule 460), and a third identifier information 465", referring to the criteria identifier C 465' (of the route selection descriptor (list) 463 of the first user equipment route selection policy rule 460).
Hence, a part of a piece of user equipment route selection policy information (namely the list identifier A 463', the component identifier B 464', and the criteria identifier C 465') is or are able to be identified by means of a user equipment route selection policy identifier 455, i.e. the pieces of identifier information 463", 464", 465". As a consequence according to the present invention, it is possible to assign a user equipment route selection policy rule 460, 470, 480, 490 or a part 463', 464', 465' of such a user equipment route selection policy rule 460, 470, 480, 490 (i.e. the content thereof) to a user equipment route selection policy identifier 455 (i.e. the first, second, and third user equipment route selection policy identifier information 463", 464", 465"). Hence, this possibility to identify or to assign is able to be operatively used when using other user equipment route selection policy rules 470, 480 (being examples of further, operatively used, pieces of user equipment route selection policy information, i.e. regarding the further (operatively used) piece of user equipment route selection policy information, the definition of its content is based, at least partly, not by explicitly providing its content (e.g. by means of enumerating different conditions or allowed or disallowed parameters, i.e. parts 463', 464', 465') but by referring to the user equipment route selection policy identifier 455, i.e. pieces of user equipment route selection policy identifier information 463", 464", 465". Hence, adding a reference identifier to certain elements in the first user equipment route selection policy rule 460 allows the second and third user equipment route selection policy rule 470, 480 to be more efficiently defined by just including the user equipment route selection policy identifier 455 instead of the whole (content of the) element information.

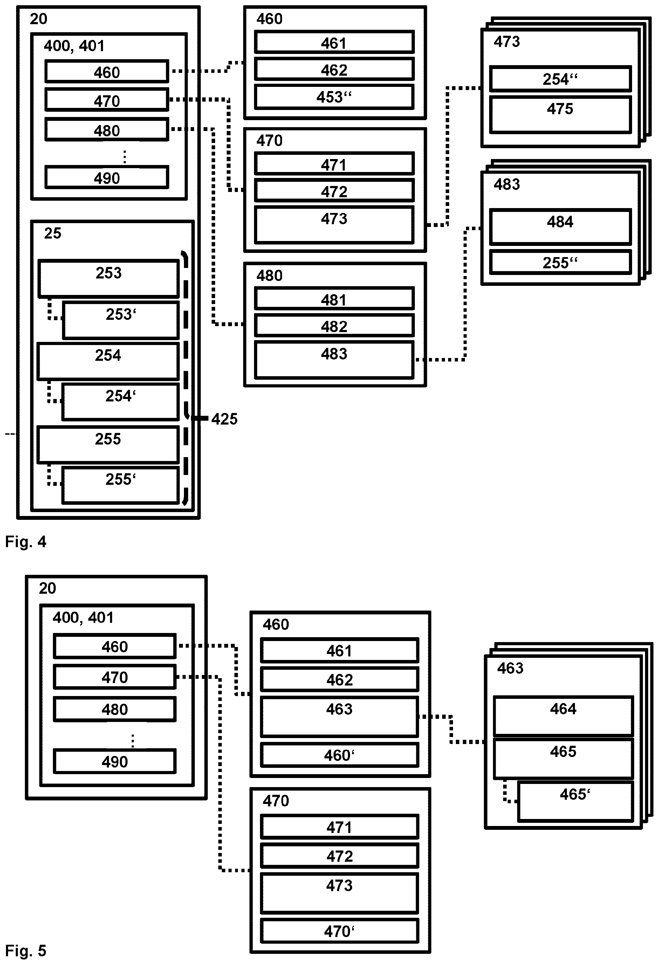

In Figure 4, an embodiment is schematically shown how a separate user equipment route selection policy component repository 25 is able to be used to build user equipment route selection policy information 400 (or user equipment route selection policy rules 460, 470, 480, 490) efficiently by reusing user equipment route selection policy components, or one or a plurality of pieces of referable user equipment route selection policy information 425: Again, the (further) user equipment route selection policy information 400, 401 comprises a first, second, third and fourth user equipment route selection policy rule 460, 470, 480, 490. The structures of the first, second and third user equipment route selection policy rule 460, 470, 480 are schematically shown; however, it is understood that such structure or structures is only provided exemplarily.
Furthermore, shown as part of the user equipment 20, the user equipment route selection policy component repository 25 comprises a first user equipment route selection policy component 253, corresponding to a route selection descriptor (list), wherein the first user equipment route selection policy component 253, being or corresponding to a route selection descriptor (list), comprises a list identifier A (designated, in Figure 4, by reference sign 253'). Additionally, the user equipment route selection policy component repository 25 is exemplarily shown as comprising (besides the first user equipment route selection policy component 253) a second user equipment route selection policy component 254, being or corresponding to a route selection component 254, and comprising a component identifier B (designated, in Figure 4, by reference sign 254'). Additionally, the user equipment route selection policy component repository 25 is exemplarily shown as comprising (besides the first and second user equipment route selection policy component 253, 254) a third user equipment route selection policy component 255, being or corresponding to a route selection validation criteria 255, and comprising a criteria identifier C (designated, in Figure 4, by reference sign 255'). According to the exemplary embodiment shown in Figure 4, the first user equipment route selection policy rule 460 comprises a precedence value 461, a traffic descriptor 462 and, instead of an explicit route selection descriptor (list), it is provided in the form of an identifier 455 (or a piece of identifier information 455), namely a first identifier information 453", referring to the list identifier A 253' (of the first user equipment route selection policy component 253). Furthermore, according to the exemplary embodiment shown in Figure 4, the second user equipment route selection policy rule 470 comprises a precedence value 471, a traffic descriptor 472 and at least one route selection descriptor (list) 473. The route selection descriptor (list) 473 of the second user equipment route selection policy rule 470 comprises route selection validation criteria 475 and, instead of an explicit route selection component, an identifier 455 (or a piece of identifier information 455), namely a second identifier information 254", referring to the component identifier B 254' (of the second user equipment route selection policy component 254). Furthermore, according to the exemplary embodiment shown in Figure 4, the third user equipment route selection policy rule 480 comprises a precedence value 481, a traffic descriptor 482 and at least one route selection descriptor (list) 483. The route selection descriptor (list) 483 of the third user equipment route selection policy rule 480 comprises route selection components 484 and, instead of explicit route selection criteria, an identifier 455 (or a piece of identifier information 455), namely a third identifier information 255", referring to the criteria identifier C 255' (of the third user equipment route selection policy component 255).
Hence, Figure 4 shows an example of an embodiment where the separate user equipment route selection policy component repository 25 - comprising a piece of user equipment route selection policy information, or, rather, a part thereof (namely the list identifier A 253', the component identifier B 254', and the criteria identifier C 255') - is able to be identified by means of user equipment route selection policy identifiers 455, i.e. the pieces of identifier information 453", 454", 455", thereby being able to be used to build user equipment route selection policy information 400 (or user equipment route selection policy rules 460, 470, 480, 490) efficiently by reusing the user equipment route selection policy components of the user equipment route selection policy component repository 25. The parts of pieces of user equipment route selection policy information of the user equipment route selection policy component repository 25 (i.e. the list identifier A 253', the component identifier B 254', and the criteria identifier C 255') are also called pieces of referable user equipment route selection policy information 425.

Figure 5 schematically shows the user equipment route selection policy information 400 being stored in the user equipment 20, wherein the user equipment route selection policy information 400 or user equipment route selection policy rules comprise(s) a validity indication, or a validity flag information: Again, the (further) user equipment route selection policy information 400, 401 comprises a first, second, third and fourth user equipment route selection policy rule 460, 470, 480, 490. The structures of the first and second user equipment route selection policy rule 460, 470 are schematically shown; however, it is understood that such structure or structures is only provided exemplarily.
According to the exemplary embodiment shown in Figure 5, the first user equipment route selection policy rule 460 comprises a precedence value 461, a traffic descriptor 462 and a route selection descriptor (list) 463. Additionally, the first user equipment route selection policy rule 460 comprises a validity flag 460' as a validity indication, or a validity flag information. Furthermore, the route selection descriptor (list) 463 comprises route selection components 464, and route selection validation criteria 465, and especially as part of the route selection validation criteria 465, a network validity information as a validity indication, or a validity flag information. Furthermore, according to the exemplary embodiment shown in Figure 5, the second user equipment route selection policy rule 470 comprises a precedence value 471, a traffic descriptor 472 and at least one route selection descriptor (list) 473. Additionally, the second user equipment route selection policy rule 470 comprises a validity flag 470' as a validity indication, or a validity flag information. Hence, a variant is provided where user equipment route selection policies are stored in the user equipment 20 and used or not according to the validity indication or validity flag; the validity flag is either an independent information element or, e.g., a "null precedence" indicator.

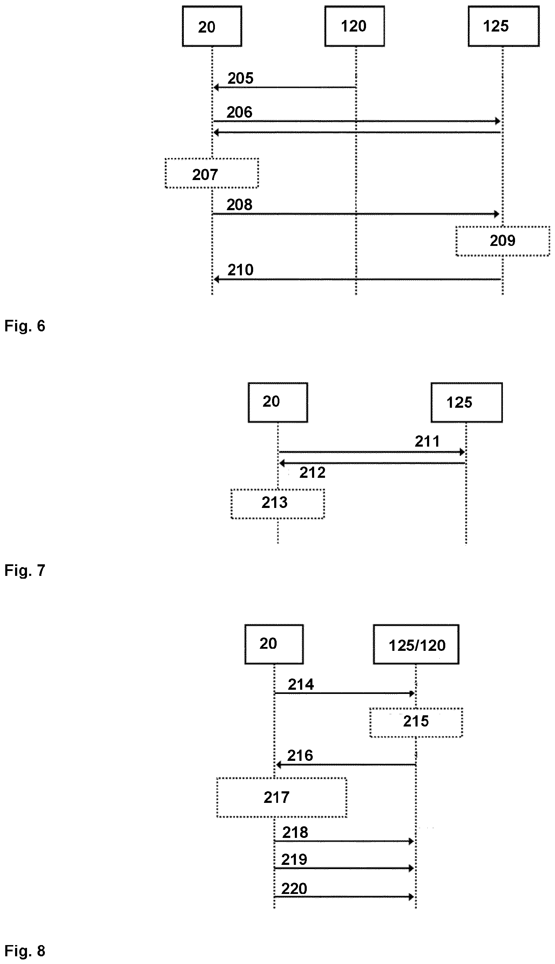

In Figure 6, an embodiment of the transmission of user equipment route selection policy information 400 towards the user equipment 20 according to the present invention is schematically shown by means of a communication diagram between the user equipment 20, the core network 120 and the user equipment route selection policy repository 125.
In a fifth processing step 205, the core network 120 sets user equipment route selection policy information 400, i.e. transmits corresponding pieces of information or messages to the user equipment 20, especially including the user equipment route selection policy component information (i.e. one or a plurality of pieces of referable user equipment route selection policy information 425) to be stored in the user equipment route selection policy component repository 25 and/or a user equipment route selection policy repository (or rule reference) 125 and location information thereof. In a sixth processing step 206, the user equipment 20 requests, from the user equipment route selection policy repository (or rule reference) 125 (using the corresponding location or address information thereof), if applicable, further user equipment route selection policy information 400 or user equipment route selection policy rules or components, and the user equipment route selection policy repository 125 transmits the requested pieces of information to the user equipment 20. In a seventh processing step 207, the user equipment 20 is then able to compose or generate the ruleset of user equipment route selection policy rules or user equipment route selection policy information 400. In an eighth processing step 208, the user equipment 20 subscribes, at or with the user equipment route selection policy repository 125, to changes to the respective, relevant user equipment route selection policy rules or relevant user equipment route selection policy information 400 (retrieved from the user equipment route selection policy repository 125 or stored in the user equipment route selection policy component repository 25 of the user equipment 20). In case of a modification (e.g. a change or a removal), in a ninth processing step 209, of these relevant user equipment route selection policy rules or relevant user equipment route selection policy information 400, a notification is sent, in a tenth processing step 210 to the user equipment 20 of such modifications of the relevant resources (relevant user equipment route selection policy rules or relevant user equipment route selection policy information 400).

Figure 7 schematically shows, by means of a communication diagram between the user equipment 20 and the user equipment route selection policy repository 125, a further embodiment of the transmission of user equipment route selection policy information 400 towards the user equipment 20 according to the present invention: In an eleventh processing step 211, the user equipment 20 queries the user equipment route selection policy repository 125 for user equipment route selection policy rules or user equipment route selection policy information 400. In a twelfth processing step 212, the user equipment route selection policy repository 125 returns matching user equipment route selection policy rules to the user equipment 20. In a thirteenth processing step 213, the rules received by the user equipment 20 are applied.
According to such an embodiment of the present invention, it is advantageously possible for the user equipment 20 to perform discovery and selection of URSPs rule (URSPs being uniquely identifiable) and thus allowing the user equipment 20 to query for desirable URSPs (e.g. for a given application) and selecting one or more of the returned rules for deployment based on a user equipment-based selection and not by a network-based decision, i.e. resulting in a user equipment route selection policy discovery by the user equipment 20

Figure 8 schematically shows, by means of a communication diagram between the user equipment 20 and the user equipment route selection policy repository 125 or the core network 120, an embodiment of a modification and/or deletion of user equipment route selection policy information 400 according to the present invention: In a fourteenth processing step 214, the user equipment 20 subscribes, at or with the user equipment route selection policy repository 125 or at or with the core network 120, to changes to the respective, relevant user equipment route selection policy rules or relevant user equipment route selection policy information 400 (retrieved from the user equipment route selection policy repository 125 or stored in the user equipment route selection policy component repository 25 of the user equipment 20). In case of a modification (e.g. a change or a removal), in a fifteenth processing step 215, of these relevant user equipment route selection policy rules or relevant user equipment route selection policy information 400, a notification is sent, in a sixteenth processing step 216 to the user equipment 20 of such modifications of the relevant resources (relevant user equipment route selection policy rules or relevant user equipment route selection policy information 400). In a seventeenth processing step 217, the resource modification is applied - such a modification may affect several user equipment route selection policy rules or user equipment route selection policy components. In an eighteenth processing step 218, the user equipment 20 confirms, if applicable, the successful modification of the user equipment route selection policy rule or component. In a nineteenth processing step 219, the user equipment 20 confirms, if applicable, the successful removal of the user equipment route selection policy rule or component. In a twentieth processing step 220, the user equipment 20 confirms, if applicable, an error with user equipment route selection policy rules or components.
Hence, it is advantageously possible according to the present invention that the update of URSP components (i.e. the modification/deletion of URSP elements) is possible via the core network 120 and/or the URSP repository 125: Regarding this case, it is preferred that the URSPs within the user equipment contain an ID, i.e. an identifier, and that the user equipment 20 notifies to the core network 120 and/or the user equipment route selection policy repository 125 the affected user equipment route selection policies, as well as what changes resulted from the URSP resource modification, e.g.:
"OK": URSP rule(s) employing the resource were successfully modified,
"Removed": the change (e.g. resource removal) may result in the removal of URSP rules,
"Error": the change may result in circular references and/or an invalid rule, with the indication that a given rule is now invalid.

It is especially preferred according to the present invention (but not necessarily the case) that the user equipment 20 is able to request the user equipment route selection policy information 400 (from the corresponding telecommunications network 100, especially the corresponding core network 120) or to trigger to be provided with such (updated and/or appropriate and/or more suitable) user equipment route selection policy information 400. With respect to such a preferred embodiment, the user equipment 20 transmits a user equipment route selection policy update request message to the telecommunications network 100, and the corresponding user equipment route selection policy information 400 is received by the user equipment 20.

It is especially preferred according to the present invention (but not necessarily the case) that the policy and charging function 130 and/or the user equipment route selection policy repository 125 can be requested to modify more than one or route selection policy rules or user equipment route selection policy information 400 based on
-- a provided partial piece of identifier information, i.e. applying to all identifiers sharing certain structure or different information fields
-- matching parameters within the route selection policy rule or user equipment route selection policy information 400.

Regarding the user equipment 20 represented in Figures 1 and 2, it is preferred according to the present invention (but not mandatorily the case) that standalone non-public networks (SNPNs) are accessible, e.g. according to the 5G radio access technology. The user equipment 20 comprises, for a given access technology for which standalone non-public networks are possible, the access mode configuration information which relates to (or indicates) either a first network selection mode or a second network selection mode that the user equipment is alternatively able to use; in addition to the first and second network selection mode, further network selection modes are preferably (but not necessarily) possible, e.g. a third network selection mode, obtained from the combination of the available networks in the first and second network selection mode.
Typically, the user equipment 20 comprises a universal integrated circuit card or USIM (comprising user or subscriber credentials) and (if applicable) the access mode configuration information, the content of which defines or indicates whether the user equipment 20 is, at a considered point in time and regarding network selection, either in the SNPN mode (and, hence, exclusively or preferably accessing standalone non-public networks) or rather in the PLMN mode (normal mode) (and, hence, exclusively or preferably accessing public land mobile networks).
Especially according to the present invention, the user equipment route selection policy information 400, 401 comprises the access mode-related validity element 441 which is related to the content of the access mode configuration information and either matches the access mode configuration information or not.

It has been said that, according to the present invention, by means of the reference to the (content of the) part of the piece of user equipment route selection policy information 400 (especially a user equipment route selection policy component) - by the further piece of user equipment route selection policy information 401 -, resulting in the further user equipment route selection policy information comprising the (user equipment route selection policy) content of the referred part of the piece of user equipment route selection policy information, it is advantageously possible according to the present invention, to address this content without the necessity to (explicitly) repeat it - the only requirement being to refer to (instead of copying (all) this content) the corresponding user equipment route selection policy identifier (information) 455, i.e. this identifier information being representative of the respective content or representing this content.
Especially, this allows for a more flexible interaction between the core network 120 (and/or the user equipment route selection policy repository 125) and the user equipment 20 such that user equipment route selection policies can be actively queried and deployed by the user equipment 20, if so requested by internal logic and/or application(s) of or being executed by the user equipment 20.
Furthermore especially, this allows for a URSP route selection referencing and chaining: When setting up complex URSPs, it is advantageously possible to:
-- reduce signaling to create a complex ruleset based on rules already existing - at least partly, and regarding its "rule content" - in the user equipment 20;
-- reduce storage in the user equipment, especially in case that such rules are to be stored, especially pre-configured, in the USIM of the user equipment 20, where space is at a premium;
-- allow a more flexible rule setting: It is advantageously possible that there is a preloaded set of URSPs and they could be combined in different ways
-- by changing a "base rule" (or corresponding base rule components) used by several other rules, many rules are able to be changed at once;
Hence, the present invention provides - by means of a method for identifying and/or for referring to user equipment route selection policies (or corresponding information 400) - also for a reuse and for chaining of URSP and/or URSP elements, and additionally provides the possibility to univocally reference parts (or components) of user equipment route selection policy information.
Furthermore, according to the present invention, it is advantageously possible for the user equipment 20 to deploy different user equipment route selection policies to work properly (i.e. that application traffic gets routed via the appropriate path), depending on its network location.

In conventionally known telecommunications networks, there is no way for a user equipment to query the (core) network for URSPs based on a selection criterion; additionally, user equipment route selection policies cannot be univocally referenced, reused and/or chained. Hence, in such conventionally known telecommunications networks, user equipment route selection policies (or their contents or elements thereof) cannot be reused: These are generated each time and such generated information elements are not uniquely identifiable. As such, these information elements cannot be reused and/or cross-referenced.

In contrast, according to the present invention, an identifier 455 or an identifier information (user equipment route selection policy identifier) is able to be added to, e.g., the route selection descriptor list or the route selection descriptor (of a user equipment route selection policy rule). As a consequence, user equipment route selection policy rules or components are able, instead of (the content of) a route selection descriptor list or instead of (the content of) elements within the route selection descriptor list, use said (user equipment route selection policy) identifier 455 (information). When evaluating the user equipment route selection policies, the user equipment 20 evaluates said rule as if the referenced content was there.
Further advantages according to the present invention include:
-- If a route selection descriptor, being referenced in a given URSP (rule), is changed, when said URSP is executed or applied, that change applies - i.e. this amounts to an indirect URSP modification;
-- a better storage and/or management (e.g. transmission from the network, deletion of user equipment route selection policy rules, querying by the network of stored references) of route selection descriptor(s) and/or lists is possible;
-- store user equipment route selection policy information at the user equipment that can be activated at a later time, deactivate currently active route selection policy information so that it can be reactivated at a later time without the need to re-send said information;
-- in order to avoid circular reference loops, it is proposed to apply a limit of indirect references configured within the user equipment 20; furthermore, the notification by the user equipment 20 of the creation of circular loops towards the network 100 is proposed;
-- it is proposed to realize a "precompilation" of URSPs containing indirect references so that at run time indirect references need not be dynamically evaluated.

According to the present invention - and in contrast to conventionally known telecommunications networks where user equipment route selection policies are self-contained - it is advantageously possible and certainly more efficient to use potentially complex route selection descriptor(s) and/or user equipment route selection policies altogether can be re-used without the need of re-sending the whole content via the control plane, as well as allowing a linking between user equipment route selection policies so that a change to a referenced element effectively changes multiple user equipment route selection policies indirectly.
It is especially proposed to use at least the following two ways to reuse elements of one user equipment route selection policy information 400 in another user equipment route selection policy information 401:
-- an identifier (user equipment route selection policy identifier (information)) is added to existing traffic descriptors, route selection descriptor lists within a user equipment route selection policy, route selection components and/or route selection validation criteria that can then be referenced by other user equipment route selection policies; such identifiers are able to be used an addition to currently known user equipment route selection policies; the explicit content of such user equipment route selection policy elements has to be placed in at least one user equipment route selection policy (rule); an advantage is its increased level of backward-compatibility;
-- furthermore, according to the present invention, a separate storage of user equipment route selection policy elements is made possible: user equipment route selection policy elements (or user equipment route selection policy components) or URSP rules (especially URSP rules have an additional information indicating whether the rule is valid or not) within the user equipment 20, i.e. components that can be referenced when building new user equipment route selection policies.
A further generalization of the second variant is that it is possible to use an external location as a repository from where the rule components are able to be retrieved by the user equipment (preferably retrieved using the control plane or the user plane from a core network). In this case, it is furthermore preferred that the identifier is contained within the location reference (e.g. a URI), and, additionally, the user equipment 20 may cache (i.e. store) the retrieved user equipment route selection policy components and/or the user equipment 20 might subscribe to changes to the retrieved URSP components.

According to all embodiment of the present invention, it is preferred that the identifier of a given URSP component/list contains the nature (i.e. the type) of the resource being referenced.

Furthermore, according to all embodiments of the present invention, it is preferred that URSP references are evaluated once and the resulting result cached (in order to improve the performance), i.e. resulting in an approach to once-compilation instead of evaluating the references each time.

## Claims

1. Method for identifying and/or for referring to a user equipment route selection policy information (400) when operating a user equipment (20) connected to a telecommunications network (100), wherein the telecommunications network (100) comprises a core network (120) comprising a policy and charging function (130), wherein the policy and charging function (130) is configured to transmit the user equipment route selection policy information (400) to the user equipment (20),
**characterized in that** a part of a piece of user equipment route selection policy information (400) is able to be identified by means of a user equipment route selection policy identifier (455), wherein the part of the piece of user equipment route selection policy information (400) that is able to be identified by means of the user equipment route selection policy identifier (455) is a route selection descriptor or route selection descriptor list (463, 473, 483), route selection component (464, 474, 484), or route selection validation criteria (465, 475, 485),
wherein, in order to reduce usage of transmission capacity on an air interface between the telecommunications network (100) and the user equipment (20), the method comprises the following steps:
-- in a first step, the part of the piece of user equipment route selection policy information (400) is assigned to the user equipment route selection policy identifier (455),
-- in a second step, a further piece of user equipment route selection policy information (401) is transmitted to the user equipment (20), wherein the further piece of user equipment route selection policy information (401) or a part thereof refers to the user equipment route selection policy identifier (455) and thereby comprises an information content of the part of the piece of user equipment route selection policy information (400).

2. Method according to claim 1, wherein, in order to reduce usage of storage space within the user equipment (20), the further piece of user equipment route selection policy information (401) is stored within the user equipment (20) after being received by the user equipment (20).

3. Method according to claim 1 or 2, wherein the user equipment (20) comprises a user equipment route selection policy component repository (25), wherein the user equipment route selection policy component repository (25) comprises one or a plurality of pieces of referable user equipment route selection policy information (425) or part thereof, each of these pieces of referable user equipment route selection policy information (425) or part thereof comprising or being assigned or associated to a respective user equipment route selection policy identifier (455), wherein the further piece of user equipment route selection policy information (400) that is operatively used by the user equipment (20) uses at least part of the pieces of referable user equipment route selection policy information (425) or part thereof.

4. Method according to one of the preceding claims, wherein the one or a plurality of pieces of referable user equipment route selection policy information (425) comprises a validity indication, wherein the user equipment evaluates a piece of referable user equipment route selection policy information (425) if the validity indication indicates that the pieces of referable user equipment route selection policy information (425) is valid.

5. Method according to one of the preceding claims, wherein the telecommunications network (100) or a part thereof, especially the policy and charging function (130), comprises or is able to access a user equipment route selection policy repository (125), wherein the user equipment route selection policy repository (125) comprises one or a plurality of pieces of referable user equipment route selection policy information (425) or part thereof, wherein each of these pieces of referable user equipment route selection policy information (425) or part thereof comprises or is assigned or associated to a respective user equipment route selection policy identifier (455), wherein in order for the user equipment (20) to operatively use the further piece of user equipment route selection policy information (401) or part thereof referring to or comprising the user equipment route selection policy identifier (455), the method furthermore comprises the steps of:
-- in a third step, subsequent to the first step, the user equipment (20) receives the further piece of user equipment route selection policy information (401) or part thereof, especially from the telecommunications network (100) or a part thereof, especially from the policy and charging function (130),
-- in a fourth step, subsequent to the third step, the user equipment (20) retrieves, from the user equipment route selection policy repository (125), a piece of referable user equipment route selection policy information (425) or part thereof by means of using the respective user equipment route selection policy identifier (455),
wherein especially the user equipment (20) stores or caches the piece of referable user equipment route selection policy information (425) or part thereof.

6. Method according to claim 5, wherein, in a fifth step, subsequent to the fourth step, the user equipment (20) subscribes to changes with respect to the piece of referable user equipment route selection policy information (425) or part thereof, and, in case of such changes, the user equipment (20) receives a notification of modification or a notification of deletion regarding the piece of referable user equipment route selection policy information (425) from the user equipment route selection policy repository (125).

7. Method according to claim 6, wherein, in a sixth step, subsequent to the fifth step, the user equipment (20) transmits to the user equipment route selection policy repository (125) a corresponding information in case that the notification of modification or the notification of deletion regarding the piece of referable user equipment route selection policy information (425) resulted in
-- a modification of the corresponding further piece of user equipment route selection policy information (401) or part thereof, or
-- a removal of the corresponding further piece of user equipment route selection policy information (401) or part thereof, or
-- an error regarding the corresponding further piece of user equipment route selection policy information (401) or part thereof.

8. Method according to one of the preceding claims, wherein, in a seventh step, subsequent to the first step, the user equipment (20) queries the user equipment route selection policy repository (125) for at least one further piece of user equipment route selection policy information (401) or part thereof relating to a query information, and the user equipment (20) receives at least one matching further piece of user equipment route selection policy information (401) or part thereof.

9. Method according to one of the preceding claims, wherein the policy and charging function (130) and/or the user equipment route selection policy repository (125) is able to be requested, by the user equipment (20) or another entity, to modify more than one or route selection policy rules or user equipment route selection policy information (400) based on
-- a provided partial piece of user equipment route selection policy identifier, thereby applying such modifications to all concerned pieces of user equipment route selection policy information (400) having or corresponding to user equipment route selection policy identifiers (455) that are sharing the parts or a certain structure or different information fields of the partial piece of user equipment route selection policy identifier and/or
-- matching parameters within the user equipment route selection policy rule or user equipment route selection policy information (400).

10. User equipment (20) for identifying and/or for referring to a user equipment route selection policy information (400) when being operated in connection to a telecommunications network (100), wherein the user equipment (20) is configured to receive the user equipment route selection policy information (400) from a policy and charging function (130) of the telecommunications network (100),
**characterized in that** a part of a piece of user equipment route selection policy information (400) is able to be identified by means of a user equipment route selection policy identifier (455), wherein the part of the piece of user equipment route selection policy information (400) that is able to be identified by means of the user equipment route selection policy identifier (455) is a route selection descriptor or route selection descriptor list (463, 473, 483), route selection component (464, 474, 484), or route selection validation criteria (465, 475, 485),
wherein, in order to reduce usage of transmission capacity on an air interface between the telecommunications network (100) and the user equipment (20), the user equipment (20) is configured such that:
-- the part of the piece of user equipment route selection policy information (400) is assigned to the user equipment route selection policy identifier (455),
-- a further piece of user equipment route selection policy information (401) is received by the user equipment (20), wherein the further piece of user equipment route selection policy information (401) or a part thereof refers to the user equipment route selection policy identifier (455) and thereby comprises an information content of the part of the piece of user equipment route selection policy information (400).

11. System for identifying and/or for referring to a user equipment route selection policy information (400) when operating a user equipment (20) connected to a telecommunications network (100), wherein the system comprises the user equipment (20) according to claim 10 and the telecommunications network (100), wherein the telecommunications network (100) comprises a core network (120) comprising a policy and charging function (130), wherein the policy and charging function (130) is configured to transmit the user equipment route selection policy information (400) to the user equipment (20),
**characterized in that** a part of a piece of user equipment route selection policy information (400) is able to be identified by means of a user equipment route selection policy identifier (455), wherein the part of the piece of user equipment route selection policy information (400) that is able to be identified by means of the user equipment route selection policy identifier (455) is a route selection descriptor or route selection descriptor list (463, 473, 483), route selection component (464, 474, 484), or route selection validation criteria (465, 475, 485),
wherein, in order to reduce usage of transmission capacity on an air interface between the telecommunications network (100) and the user equipment (20), the system is configured such that:
-- the part of the piece of user equipment route selection policy information (400) is assigned to the user equipment route selection policy identifier (455),
-- a further piece of user equipment route selection policy information (401) is transmitted to the user equipment (20), wherein the further piece of user equipment route selection policy information (401) or a part thereof refers to the user equipment route selection policy identifier (455) and thereby comprises an information content of the part of the piece of user equipment route selection policy information (400).

12. Program comprising a computer readable program code which, when executed realizes the method according one of claims 1 to 9.

13. Computer-readable medium comprising instructions which when executed realizes the method according one of claims 1 to 9.

## Patentansprüche

1. Verfahren zum Identifizieren von und/oder zum Verweisen auf Benutzerausrüstungs-Routenauswahlrichtlinieninformationen (400) beim Betreiben einer Benutzerausrüstung (20), die mit einem Telekommunikationsnetz (100) verbunden ist, wobei das Telekommunikationsnetz (100) ein Kernnetz (120) umfasst, das eine Richtlinien- und Gebührenberechnungsfunktion (130) umfasst, wobei die Richtlinien- und Gebührenberechnungsfunktion (130) dafür eingerichtet ist, die Benutzerausrüstungs-Routenauswahlrichtlinieninformationen (400) an die Benutzerausrüstung (20) zu senden,
**dadurch gekennzeichnet, dass** ein Teil einer Benutzerausrüstungs-Routenauswahlrichtlinieninformation (400) mittels einer Benutzerausrüstungs-Routenauswahlrichtlinienkennung (455) identifiziert werden kann, wobei der Teil der Benutzerausrüstungs-Routenauswahlrichtlinieninformation (400), der mittels der Benutzerausrüstungs-Routenauswahlrichtlinienkennung (455) identifiziert werden kann, ein Routenauswahldeskriptor oder eine Routenauswahldeskriptorliste (463, 473, 483), eine Routenauswahlkomponente (464, 474, 484) oder Routenauswahlvalidierungskriterien (465, 475, 485) ist,
wobei, um die Nutzung von Übertragungskapazität an einer Luftschnittstelle zwischen dem Telekommunikationsnetz (100) und der Benutzerausrüstung (20) zu reduzieren, das Verfahren die folgenden Schritte umfasst:
- in einem ersten Schritt wird der Teil der Benutzerausrüstungs-Routenauswahlrichtlinieninformation (400) der Benutzerausrüstungs-Routenauswahlrichtlinienkennung (455) zugeordnet,
- in einem zweiten Schritt wird eine weitere Benutzerausrüstungs-Routenauswahlrichtlinieninformation (401) an die Benutzerausrüstung (20) gesendet, wobei die weitere Benutzerausrüstungs-Routenauswahlrichtlinieninformation (401) oder ein Teil davon auf die Benutzerausrüstungs-Routenauswahlrichtlinienkennung (455) verweist und dabei einen Informationsinhalt des Teils der Benutzerausrüstungs-Routenauswahlrichtlinieninformation (400) umfasst.

2. Verfahren nach Anspruch 1, wobei, um die Nutzung von Speicherplatz innerhalb der Benutzerausrüstung (20) zu verringern, die weitere Benutzerausrüstungs-Routenauswahlrichtlinieninformation (401) innerhalb der Benutzerausrüstung (20) gespeichert wird, nachdem sie durch die Benutzerausrüstung (20) empfangen wurde.

3. Verfahren nach Anspruch 1 oder 2, wobei die Benutzerausrüstung (20) ein Benutzerausrüstungs-Routenauswahlrichtlinienkomponentenrepositorium (25) umfasst, wobei das Benutzerausrüstungs-Routenauswahlrichtlinienkomponentenrepositorium (25) eine oder mehrere verweisfähige Benutzerausrüstungs-Routenauswahlrichtlinieninformationen (425) oder einen Teil davon umfasst, wobei jede dieser verweisfähigen Benutzerausrüstungs-Routenauswahlrichtlinieninformationen (425) oder ein Teil davon eine jeweilige Benutzerausrüstungs-Routenauswahlrichtlinienkennung (455) umfasst oder dieser zugeordnet ist oder mit dieser verknüpft ist, wobei die weitere Benutzerausrüstungs-Routenauswahlrichtlinieninformation (400), die durch die Benutzerausrüstung (20) im Betrieb verwendet wird, mindestens einen Teil der verweisfähigen Benutzerausrüstungs-Routenauswahlrichtlinieninformationen (425) oder einen Teil davon verwendet.

4. Verfahren nach einem der vorangehenden Ansprüche, wobei die eine oder wobei mehrere verweisfähige Benutzerausrüstungs-Routenauswahlrichtlinieninformationen (425) einen Validitätshinweis umfassen, wobei die Benutzerausrüstung eine verweisfähige Benutzerausrüstungs-Routenauswahlrichtlinieninformation (425) auswertet, falls der Validitätshinweis angibt, dass die verweisfähigen Benutzerausrüstungs-Routenauswahlrichtlinieninformationen (425) valide sind.

5. Verfahren nach einem der vorangehenden Ansprüche, wobei das Telekommunikationsnetz (100) oder ein Teil davon, insbesondere die Richtlinien- und Gebührenberechnungsfunktion (130), ein Benutzerausrüstungs-Routenauswahlrichtlinienrepositorium (125) umfasst oder in der Lage ist, auf dieses zuzugreifen, wobei das Benutzerausrüstungs-Routenauswahlrichtlinienrepositorium (125) eine oder mehrere verweisfähige Benutzerausrüstungs-Routenauswahlrichtlinieninformationen (425) oder einen Teil davon umfasst, wobei jede dieser verweisfähigen Benutzerausrüstungs-Routenauswahlrichtlinieninformationen (425) oder ein Teil davon eine jeweilige Benutzerausrüstungs-Routenauswahlrichtlinienkennung (455) umfasst oder dieser zugeordnet oder mit dieser verknüpft ist,
wobei, damit die Benutzerausrüstung (20) die weitere Benutzerausrüstungs-Routenauswahlrichtlinieninformation (401) oder einen Teil davon, die bzw der auf die Benutzerausrüstungs-Routenauswahlrichtlinienkennung (455) verweist oder diese umfasst, im Betrieb verwenden kann, das Verfahren darüber hinaus folgende Schritte umfasst:
- in einem dritten Schritt, im Anschluss an den ersten Schritt, empfängt die Benutzerausrüstung (20) die weitere Benutzerausrüstungs-Routenauswahlrichtlinieninformation (401) oder einen Teil davon, insbesondere von dem Telekommunikationsnetz (100) oder einem Teil davon, insbesondere von der Richtlinien- und Gebührenberechnungsfunktion (130),
- in einem vierten Schritt, im Anschluss an den dritten Schritt, ruft die Benutzerausrüstung (20) aus dem Benutzerausrüstungs-Routenauswahlrichtlinienrepositorium (125) eine verweisfähige Benutzerausrüstungs-Routenauswahlrichtlinieninformation (425) oder einen Teil davon mittels Verwendung des jeweiligen Benutzerausrüstungs-Routenauswahlrichtlinienkennung (455) ab,
wobei insbesondere die Benutzerausrüstung (20) die verweisfähige Benutzerausrüstungs-Routenauswahlrichtlinieninformation (425) oder einen Teil davon speichert oder zwischenspeichert.

6. Verfahren nach Anspruch 5, wobei in einem fünften Schritt, im Anschluss an den vierten Schritt, die Benutzerausrüstung (20) Änderungen in Bezug auf die verweisfähige Benutzerausrüstungs-Routenauswahlrichtlinieninformation (425) oder einen Teil davon abonniert, und die Benutzerausrüstung (20), für den Fall solcher Änderungen, eine Benachrichtigung über eine Modifikation oder eine Benachrichtigung über eine Löschung in Bezug auf die verweisfähige Benutzerausrüstungs-Routenauswahlrichtlinieninformation (425) von dem Benutzerausrüstungs-Routenauswahlrichtlinienrepositorium (125) empfängt.

7. Verfahren nach Anspruch 6, wobei in einem sechsten Schritt, im Anschluss an den fünften Schritt, die Benutzerausrüstung (20) eine entsprechende Information an das Benutzerausrüstungs-Routenauswahlrichtlinienrepositorium (125) sendet, falls die Benachrichtigung über eine Modifikation oder die Benachrichtigung über eine Löschung in Bezug auf die verweisfähige Benutzerausrüstungs-Routenauswahlrichtlinieninformation zu Folgenden führte:
- einer Modifikation der entsprechenden weiteren Benutzerausrüstungs-Routenauswahlrichtlinieninformation (401) oder eines Teils davon oder
- einem Entfernen der entsprechenden weiteren Benutzerausrüstungs-Routenauswahlrichtlinieninformation (401) oder eines Teils davon oder
- einem Fehler in Bezug auf die entsprechende weitere Benutzerausrüstungs-Routenauswahlrichtlinieninformation (401) oder einen Teil davon.

8. Verfahren nach einem der vorangehenden Ansprüche, wobei in einem siebten Schritt, im Anschluss an den ersten Schritt, die Benutzerausrüstung (20) das Benutzerausrüstungs-Routenauswahlrichtlinienrepositorium (125) nach mindestens einer weiteren Benutzerausrüstungs-Routenauswahlrichtlinieninformation (401) oder einem Teil davon, die bzw. der sich auf eine Abfrageinformation bezieht, abfragt und die Benutzerausrüstung (20) mindestens eine übereinstimmende weitere Benutzerausrüstungs-Routenauswahlrichtlinieninformation (401) oder einen Teil davon empfängt.

9. Verfahren nach einem der vorangehenden Ansprüche, wobei die Richtlinien- und Gebührenberechnungsfunktion (130) und/oder das Benutzerausrüstungs-Routenauswahlrichtlinienrepositorium (125) durch die Benutzerausrüstung (20) oder eine andere Entität aufgefordert werden kann, mehr als eine von Routenauswahlrichtlinienregeln oder Benutzerausrüstungs-Routenauswahlrichtlinieninformationen (400) auf der Grundlage von Folgendem zu modifizieren:
- einem bereitgestellten Teilstück einer Benutzerausrüstungs-Routenauswahlrichtlinienkennung, wodurch solche Modifikationen auf alle betroffenen Benutzerausrüstungs-Routenauswahlrichtlinieninformationen (400) angewendet werden, die Benutzerausrüstungs-Routenauswahlrichtlinienkennungen (455) haben oder diesen entsprechen, die die Teile oder eine bestimmte Struktur oder verschiedene Informationsfelder des Teilstücks der Benutzerausrüstungs-Routenauswahlrichtlinienkennung gemeinsam nutzen, und/oder
- übereinstimmenden Parametern innerhalb der Benutzerausrüstungs-Routenauswahlrichtlinienregeln oder Benutzerausrüstungs-Routenauswahlrichtlinieninformationen (400).

10. Benutzerausrüstung (20) zum Identifizieren von und/oder zum Verweisen auf Benutzerausrüstungs-Routenauswahlrichtlinieninformationen (400), wenn sie in Verbindung mit einem Telekommunikationsnetz (100) betrieben wird, wobei die Benutzerausrüstung (20) dafür eingerichtet ist, die Benutzerausrüstungs-Routenauswahlrichtlinieninformationen (400) von einer Richtlinien- und Gebührenberechnungsfunktion (130) des Telekommunikationsnetzes (100) zu empfangen,
**dadurch gekennzeichnet, dass** ein Teil einer Benutzerausrüstungs-Routenauswahlrichtlinieninformation (400) mittels einer Benutzerausrüstungs-Routenauswahlrichtlinienkennung (455) identifiziert werden kann, wobei der Teil der Benutzerausrüstungs-Routenauswahlrichtlinieninformation (400), der mittels der Benutzerausrüstungs-Routenauswahlrichtlinienkennung (455) identifiziert werden kann, ein Routenauswahldeskriptor oder eine Routenauswahldeskriptorliste (463, 473, 483), eine Routenauswahlkomponente (464, 474, 484) oder Routenauswahlvalidierungskriterien (465, 475, 485) ist,
wobei, um die Nutzung von Übertragungskapazität an einer Luftschnittstelle zwischen dem Telekommunikationsnetz (100) und der Benutzerausrüstung (20) zu reduzieren, die Benutzerausrüstung (20) so eingerichtet ist, dass:
- der Teil der Benutzerausrüstungs-Routenauswahlrichtlinieninformation (400) der Benutzerausrüstungs-Routenauswahlrichtlinienkennung (455) zugeordnet wird,
- eine weitere Benutzerausrüstungs-Routenauswahlrichtlinieninformation (401) durch die Benutzerausrüstung (20) empfangen wird, wobei die weitere Benutzerausrüstungs-Routenauswahlrichtlinieninformation (401) oder ein Teil davon auf die Benutzerausrüstungs-Routenauswahlrichtlinienkennung (455) verweist und dabei einen Informationsinhalt des Teils der Benutzerausrüstungs-Routenauswahlrichtlinieninformation (400) umfasst.

11. System zum Identifizieren von und/oder zum Verweisen auf Benutzerausrüstungs-Routenauswahlrichtlinieninformationen (400) beim Betreiben einer Benutzerausrüstung (20), wobei das System die Benutzerausrüstung (20) nach Anspruch 10 und das Telekommunikationsnetz (100) umfasst, wobei das Telekommunikationsnetz (100) ein Kernnetz (120) umfasst, das eine Richtlinien- und Gebührenberechnungsfunktion (130) umfasst, wobei die Richtlinien- und Gebührenberechnungsfunktion (130) dafür eingerichtet ist, die Benutzerausrüstungs-Routenauswahlrichtlinieninformationen (400) an die Benutzerausrüstung (20) zu senden,
**dadurch gekennzeichnet, dass** ein Teil einer Benutzerausrüstungs-Routenauswahlrichtlinieninformation (400) mittels einer Benutzerausrüstungs-Routenauswahlrichtlinienkennung (455) identifiziert werden kann, wobei der Teil der Benutzerausrüstungs-Routenauswahlrichtlinieninformation (400), der mittels der Benutzerausrüstungs-Routenauswahlrichtlinienkennung (455) identifiziert werden kann, ein Routenauswahldeskriptor oder eine Routenauswahldeskriptorliste (463, 473, 483), eine Routenauswahlkomponente (464, 474, 484) oder Routenauswahlvalidierungskriterien (465, 475, 485) ist,
wobei, um die Nutzung von Übertragungskapazität an einer Luftschnittstelle zwischen dem Telekommunikationsnetz (100) und der Benutzerausrüstung (20) zu reduzieren, das System so eingerichtet ist, dass:
- der Teil der Benutzerausrüstungs-Routenauswahlrichtlinieninformation (400) der Benutzerausrüstungs-Routenauswahlrichtlinienkennung (455) zugeordnet wird,
- eine weitere Benutzerausrüstungs-Routenauswahlrichtlinieninformation (401) an die Benutzerausrüstung (20) gesendet wird, wobei die weitere Benutzerausrüstungs-Routenauswahlrichtlinieninformation (401) oder ein Teil davon auf die Benutzerausrüstungs-Routenauswahlrichtlinienkennung (455) verweist und dabei einen Informationsinhalt des Teils der Benutzerausrüstungs-Routenauswahlrichtlinieninformation (400) umfasst.

12. Programm, umfassend einen computerlesbaren Programmcode, der, wenn er ausgeführt wird, das Verfahren nach einem der Ansprüche 1 bis 9 realisiert.

13. Computerlesbares Medium, umfassend Instruktionen, die, wenn sie ausgeführt werden, das Verfahren nach einem der Ansprüche 1 bis 9 realisieren.

## Revendications

1. Procédé permettant d'identifier et/ou de se référer à des informations de politique de sélection de route d'équipement utilisateur (400) lors de l'utilisation d'un équipement utilisateur (20) connecté à un réseau de télécommunications (100), dans lequel le réseau de télécommunications (100) comprend un réseau central (120) comprenant une fonction de politique et de facturation (130), dans lequel la fonction de politique et de facturation (130) est configurée pour transmettre les informations de politique de sélection de route d'équipement utilisateur (400) à l'équipement utilisateur (20),
**caractérisé en ce qu'**une partie d'un élément d'information de politique de sélection de route d'équipement utilisateur (400) peut être identifiée au moyen d'un identificateur de politique de sélection de route d'équipement utilisateur (455), dans lequel la partie de l'élément d'information de politique de sélection de route d'équipement utilisateur (400) qui peut être identifiée au moyen de l'identificateur de politique de sélection de route d'équipement utilisateur (455) est un descripteur de sélection de route ou une liste de descripteurs de sélection de route (463, 473, 483), un composant de sélection de route (464, 474, 484), ou des critères de validation de sélection de route (465, 475, 485),
dans lequel, afin de réduire l'utilisation de la capacité de transmission sur une interface radio entre le réseau de télécommunications (100) et l'équipement utilisateur (20), le procédé comprend les étapes suivantes :
- dans une première étape, la partie de l'élément d'information de politique de sélection de route d'équipement utilisateur (400) est attribuée à l'identificateur de politique de sélection de route d'équipement utilisateur (455),
- dans une deuxième étape, un autre élément d'information de politique de sélection de route d'équipement utilisateur (401) est transmis à l'équipement utilisateur (20), dans lequel l'autre élément d'information de politique de sélection de route d'équipement utilisateur (401) ou une partie de celui-ci fait référence à l'identificateur de politique de sélection de route d'équipement utilisateur (455) et comprend ainsi un contenu informationnel de la partie de l'élément d'information de politique de sélection de route d'équipement utilisateur (400).

2. Procédé selon la revendication 1, dans lequel, afin de réduire l'utilisation de l'espace de stockage au sein de l'équipement utilisateur (20), l'autre élément d'informations de politique de sélection de route d'équipement utilisateur (401) est stocké dans l'équipement utilisateur (20) après avoir été reçu par l'équipement utilisateur (20).

3. Procédé selon la revendication 1 ou 2, dans lequel l'équipement utilisateur (20) comprend un référentiel de composants de politique de sélection de route d'équipement utilisateur (25), dans lequel le référentiel de composants de politique de sélection de route d'équipement utilisateur (25) comprend un ou une pluralité d'éléments d'information de politique de sélection de route d'équipement utilisateur référables (425) ou une partie de ceux-ci, chacun de ces éléments d'information de politique de sélection de route d'équipement utilisateur référables (425) ou une partie de ceux-ci comprenant ou étant attribué ou associé à un identificateur de politique de sélection de route d'équipement utilisateur respectif (455), dans lequel l'autre élément d'information de politique de sélection de route d'équipement utilisateur (400) qui est utilisé de manière fonctionnelle par l'équipement utilisateur (20) utilise au moins une partie des éléments d'information de politique de sélection de route d'équipement utilisateur référables (425) ou une partie de ceux-ci.

4. Procédé selon l'une des revendications précédentes, dans lequel ledit élément ou une pluralité d'éléments d'information de politique de sélection de route d'équipement utilisateur référables (425) comprennent une indication de validité, dans lequel l'équipement utilisateur évalue un élément d'information de politique de sélection de route d'équipement utilisateur référable (425) si l'indication de validité indique que les éléments d'information de politique de sélection de route d'équipement utilisateur référables (425) sont valides.

5. Procédé selon l'une des revendications précédentes, dans lequel le réseau de télécommunications (100) ou une partie de celui-ci, en particulier la fonction de politique et de facturation (130), comprend ou peut accéder à un référentiel de politiques de sélection de route d'équipement utilisateur (125), dans lequel Le référentiel de politiques de sélection de route d'équipement utilisateur (125) comprend un ou une pluralité d'éléments d'information de politique de sélection de route d'équipement utilisateur référables (425) ou une partie de ceux-ci, chacun de ces éléments d'informations de politique de sélection de route d'équipement utilisateur référables (425) ou une partie de ceux-ci comprend ou est attribué ou associé à un identificateur de politique de sélection de route d'équipement utilisateur respectif (455),
dans lequel, pour que l'équipement utilisateur (20) utilise de manière opérationnelle l'autre élément d'information de politique de sélection de route d'équipement utilisateur (401) ou une partie de celui-ci faisant référence à ou comprenant l'identificateur de politique de sélection de route d'équipement utilisateur (455), le procédé comprend en outre les étapes consistant à :
- dans une troisième étape, postérieure à la première étape, l'équipement utilisateur (20) reçoit l'autre élément d'information de politique de sélection de route d'équipement utilisateur (401) ou une partie de celui-ci, en particulier à partir du réseau de télécommunications (100) ou d'une partie de celui-ci, en particulier à partir de la fonction de politique et de facturation (130),
- dans une quatrième étape, postérieure à la troisième étape, l'équipement utilisateur (20) récupère, à partir du référentiel de politiques de sélection de route d'équipement utilisateur (125), un élément d'information de politique de sélection de route d'équipement utilisateur référable (425) ou une partie de celui-ci au moyen de l'utilisation de l'identificateur de politique de sélection de route d'équipement utilisateur respectif (455),
dans lequel en particulier, l'équipement utilisateur (20) stocke ou met en cache l'élément d'information de politique de sélection de route d'équipement utilisateur référable (425) ou une partie de celui-ci.

6. Procédé selon la revendication 5, dans lequel, dans une cinquième étape, postérieure à la quatrième étape, l'équipement utilisateur (20) s'abonne à des modifications par rapport à l'élément d'information de politique de sélection de route d'équipement utilisateur référable (425) ou à une partie de celui-ci, et, dans le cas de telles modifications, l'équipement utilisateur (20) reçoit une notification de modification ou une notification de suppression concernant l'élément d'information de politique de sélection de route d'équipement utilisateur référable (425) à partir du référentiel de politiques de sélection de route d'équipement utilisateur (125).

7. Procédé selon la revendication 6, dans lequel, dans une sixième étape, postérieure à la cinquième étape, l'équipement utilisateur (20) transmet au référentiel de politiques de sélection de route d'équipement utilisateur (125) une information correspondante dans le cas où la notification de modification ou la notification de suppression concernant l'élément d'information de politique de sélection de route d'équipement utilisateur référable (425) a abouti à
- une modification de l'autre élément d'information de politique de sélection de route d'équipement utilisateur correspondant (401) ou d'une partie de celui-ci, ou
- une suppression de l'autre élément d'information de politique de sélection de route d'équipement utilisateur correspondant (401) ou d'une partie de celui-ci, ou
- une erreur concernant l'autre élément d'information de politique de sélection de route d'équipement utilisateur correspondant (401) ou une partie de celui-ci.

8. Procédé selon l'une des revendications précédentes, dans lequel, dans une septième étape, postérieure à la première étape, l'équipement utilisateur (20) interroge le référentiel de politiques de sélection de route d'équipement utilisateur (125) pour au moins un autre élément d'information de politique de sélection de route d'équipement utilisateur (401) ou une partie de celui-ci se rapportant à des informations d'interrogation, et l'équipement utilisateur (20) reçoit au moins un autre élément d'information de politique de sélection de route d'équipement utilisateur correspondant (401) ou une partie de celui-ci.

9. Procédé selon l'une des revendications précédentes, dans lequel la fonction de politique et de facturation (130) et/ou le référentiel de politiques de sélection de route d'équipement utilisateur (125) peut se voir demander, par l'équipement utilisateur (20) ou une autre entité, de modifier plus d'une règle de politique de sélection de route ou information de politique de sélection de route d'équipement utilisateur (400) sur la base de
- un élément partiel fourni d'identificateur de politique de sélection de route d'équipement utilisateur, appliquant ainsi de telles modifications à tous les éléments d'information de politique de sélection de route d'équipement utilisateur concernés (400) ayant ou correspondant à des identificateurs de politique de sélection de route d'équipement utilisateur (455) qui partagent les parties ou une certaine structure ou différents champs d'informations de l'élément partiel d'identificateur de politique de sélection de route d'équipement utilisateur et/ou
- paramètres correspondants dans la règle de politique de sélection de route d'équipement utilisateur ou dans les informations de politique de sélection de route d'équipement utilisateur (400).

10. Équipement utilisateur (20) permettant d'identifier et/ou de se référer à des informations de politique de sélection de route d'équipement utilisateur (400) lorsqu'il est utilisé en liaison avec un réseau de télécommunications (100), dans lequel l'équipement utilisateur (20) est configuré pour recevoir les informations de politique de sélection de route d'équipement utilisateur (400) à partir d'une fonction de politique et de facturation (130) du réseau de télécommunications (100),
**caractérisé en ce qu'**une partie d'un élément d'information de politique de sélection de route d'équipement utilisateur (400) peut être identifiée au moyen d'un identificateur de politique de sélection de route d'équipement utilisateur (455), dans lequel la partie de l'élément d'information de politique de sélection de route d'équipement utilisateur (400) qui peut être identifiée au moyen de l'identificateur de politique de sélection de route d'équipement utilisateur (455) est un descripteur de sélection de route ou une liste de descripteurs de sélection de route (463, 473, 483), un composant de sélection de route (464, 474, 484), ou des critères de validation de sélection de route (465, 475, 485),
dans lequel, afin de réduire l'utilisation de la capacité de transmission sur une interface radio entre le réseau de télécommunications (100) et l'équipement utilisateur (20), l'équipement utilisateur (20) est configuré de telle sorte que :
- la partie de l'élément d'information de politique de sélection de route d'équipement utilisateur (400) est attribuée à l'identificateur de politique de sélection de route d'équipement utilisateur (455),
- un autre élément d'information de politique de sélection de route d'équipement utilisateur (401) est reçu par l'équipement utilisateur (20), dans lequel l'autre élément d'information de politique de sélection de route d'équipement utilisateur (401) ou une partie de celui-ci fait référence à l'identificateur de politique de sélection de route d'équipement utilisateur (455) et comprend ainsi un contenu informationnel de la partie de l'élément d'information de politique de sélection de route d'équipement utilisateur (400).

11. Système permettant d'identifier et/ou de se référer à des informations de politique de sélection de route d'équipement utilisateur (400) lors de l'utilisation d'un équipement utilisateur (20) connecté à un réseau de télécommunications (100), dans lequel le système comprend l'équipement utilisateur (20) selon la revendication 10 et le réseau de télécommunications (100), dans lequel le réseau de télécommunications (100) comprend un réseau central (120) comprenant une fonction de politique et de facturation (130), dans lequel la fonction de politique et de facturation (130) est configurée pour transmettre les informations de politique de sélection de route d'équipement utilisateur (400) à l'équipement utilisateur (20),
**caractérisé en ce qu'**une partie d'un élément d'information de politique de sélection de route d'équipement utilisateur (400) peut être identifiée au moyen d'un identificateur de politique de sélection de route d'équipement utilisateur (455), dans lequel la partie de l'élément d'information de politique de sélection de route d'équipement utilisateur (400) qui peut être identifiée au moyen de l'identificateur de politique de sélection de route d'équipement utilisateur (455) est un descripteur de sélection de route ou une liste de descripteurs de sélection de route (463, 473, 483), un composant de sélection de route (464, 474, 484), ou des critères de validation de sélection de route (465, 475, 485),
dans lequel, afin de réduire l'utilisation de la capacité de transmission sur une interface radio entre le réseau de télécommunications (100) et l'équipement utilisateur (20), le système est configuré de telle sorte que :
- la partie de l'élément d'information de politique de sélection de route d'équipement utilisateur (400) est attribuée à l'identificateur de politique de sélection de route d'équipement utilisateur (455),
- un autre élément d'information de politique de sélection de route d'équipement utilisateur (401) est transmis à l'équipement utilisateur (20), dans lequel l'autre élément d'information de politique de sélection de route d'équipement utilisateur (401) ou une partie de celui-ci fait référence à l'identificateur de politique de sélection de route d'équipement utilisateur (455) et comprend ainsi un contenu informationnel de la partie de l'élément d'information de politique de sélection de route d'équipement utilisateur (400).

12. Programme comprenant un code de programme lisible par ordinateur qui, une fois exécuté, met en oeuvre le procédé selon l'une des revendications 1 à 9.

13. Support lisible par ordinateur comprenant des instructions qui, lorsqu'elles sont exécutées, mettent en oeuvre le procédé selon l'une des revendications 1 à 9.
